# EUROPÄISCHE PATENTANMELDUNG

(11) **EP 3 057 013 A1**
(43) Veröffentlichungstag der Anmeldung: **17.08.2016**
(21) Anmeldenummer: 15154894.8
(22) Anmeldetag: 12.02.2015
(51) Int. Cl.: G06F 17/50

(54) **Relationen zwischen Maschinenkomponenten**

(71) Anmelder: Siemens Aktiengesellschaft, 80333 München (DE)
(72) Erfinder: Frank, Gernot, 75365 Calw (DE)

(57) **Zusammenfassung**

Das Herstellen einer Maschine wird durch disziplinübergreifende Relationen beim Entwurf vereinfacht. Dabei wird ein erstes und ein zweites Modell (MM, EM) jeweils vom mechanischen Typ, elektrischen Typ oder Automationstyp entworfen, wobei sich der Typ des ersten Modells (MM) von dem Typ des zweiten Modells (EM) unterscheidet. Das erste Modell (MM) weist eine erste Komponente (A1M, A2M) und das zweite Modell (EM) eine zweite Komponente (A1E, A2E) auf. Es wird eine Relation (R1, R2) zwischen der ersten Komponente (A1M, A2M) und der zweiten Komponente (A1E, A2E) festgelegt. Die Relation (R1, R2) wird bei dem Entwerfen von mindestens einem der Modelle oder beim Fertigen der Maschine berücksichtigt.

## Beschreibung

Die vorliegende Erfindung betrifft ein Verfahren zum Herstellen einer Maschine durch Entwerfen eines ersten und eines zweiten Modells jeweils vom mechanischen Typ, elektrischen Typ oder Automationstyp, wobei sich der Typ des ersten Modells von dem Typ des zweiten Modells unterscheidet, und wobei das erste Modell eine erste Komponente aufweist und das zweite Modell eine zweite Komponente, sowie mit dem weiteren Schritt des Fertigens der Maschine entsprechend dem ersten und zweiten Modell. Darüber hinaus betrifft die vorliegende Erfindung eine entsprechende Vorrichtung zum Herstellen einer Maschine mit einer Entwurfseinrichtung und einer Fertigungseinrichtung.

Maschinenbauunternehmen müssen aufgrund von vor allem kostengetriebenem Wettbewerb besonders Entwicklungsaufwände reduzieren. Ein Weg scheint eine Modularisierungsstrategie zu sein. Diese ist allerdings mit erheblichen Aufwänden zur Standardisierung verbunden, was nur durch entsprechende Stückzahlen amortisiert werden kann. Gerade im Bereich der mechatronischen Modularisierung lohnt sich dies erst bei sehr hohen Stückzahlen der einzelnen Module. Dabei wird aber kein Aufwand in der Entwicklung sondern vielmehr im Bereich der Auftragsabwicklung und Produktion eingespart. Es muss also folglich eine Lösung der mechatronischen Modularisierung auch im Bereich des Maschinenbaus mit geringen Stückzahlen erfolgen. Ziel der Maschinenbauunternehmen ist hier eine für einen Kunden speziell entwickelte Lösung als "Modul" abzuspeichern und für alle Kunden als Option zugänglich zu machen. Dies ist derzeit nur durch äußerst hohen manuellen Aufwand möglich, da keine Softwareunterstützung vorhanden ist.

In mechatronischen Entwicklungsprozessen, beispielsweise einer Maschinenentwicklung, arbeiten verschiedene Disziplinen an einem Projekt, nämlich in der Regel die Mechanik, die Elektrik und die Automatisierung. Jede dieser Disziplinen besitzt Softwaretools, welche eigens für diese Tätigkeiten optimiert sind. Dabei sind verschiedene Informationen gleichermaßen in mehreren Disziplinen relevant. Als Beispiel können elektrische Anschlüsse (z. B. 400 V/36 A) angeführt werden, welche in dem elektrischen Entwurfsystem (ECAD) zur Schaltplanerstellung der Elektrokonstruktion als auch in der mechanischen Konstruktion (MCAD) zum Führen der Leitungen im dreidimensionalen Raum notwendig sind. In diesem Beispiel handelt es sich um konkrete Anschlüsse einer Baugruppe oder eines Bauteils.

Während eines Entwicklungsprozesses kann es zu Änderungen an diesen Informationen in einer Disziplin kommen. Damit die Maschine schlussendlich trotzdem funktioniert, müssen diese Änderungen kommuniziert und an die anderen Beteiligten bereitgestellt werden, sonst kommt es zu Verzögerungen oder inkonsistenten Planungen. Beispielsweise werden sowohl in der Elektrokonstruktion als auch in der mechanischen Konstruktion Komponenten definiert, welche bestellt werden müssen, um eine Maschine zu bauen. In beiden dieser Abteilungen werden beispielsweise Motoren definiert. Nun muss manuell mit hohem Aufwand vor der Bestellung herausgefunden werden, welcher Motor in beiden Abteilungen in der Stückliste auftaucht und welcher nicht. Andernfalls werden entweder zu wenig Motoren bestellt, wenn sich eine Abteilung auf die andere verlässt und umgekehrt, oder es werden zu viele bestellt, wenn beide Abteilungen dieselben Motoren bestellen. Dies wird im Weiteren als Problem der mechatronischen Stückliste bezeichnet.

Zur Übergabe solcher mechatronisch relevanten Informationen werden derzeit proprietäre Schnittstellen genutzt, die zum Import bzw. Export dienen. Andere Ansätze sind organisatorischer Natur, indem Listen dieser Informationen auf Netzlaufwerke gelegt werden. Beiden Fällen ist gemeinsam, dass die Informationen manuell bereitgestellt und nachgezogen werden müssen.

Wie oben bereits erwähnt wurde, gehen viele Unternehmen dazu über, ihre Maschinen strikt zu modularisieren, um die Wirtschaftlichkeit zu erhöhen. Dabei werden Maschinen in mechatronische Module zerlegt, welche dann auf Kundenwunsch hin konfiguriert werden. Die Konfiguration ergibt dann die kundenspezifische Ausprägung. Dabei sind derzeit zwei wesentliche Probleme zu beherrschen.

Das erste Problem wird im Weiteren als interdisziplinäre Variabilität bezeichnet. Hierbei ist zu beachten, dass je nach Entwicklungsdisziplin (Mechanik, Elektrik, Automatisierung) automatische Ziele der Entwicklung, wie beispielsweise das Erstellen von Zeichnungen (Mechanik) oder die Schaltplanerstellung (Elektrik) verfolgt werden. Dadurch ergeben sich unterschiedliche Modellierungsobjekte und Bedeutungen. Beispielsweise muss ein Motor in einem elektrischen Schaltplan berücksichtigt werden. Gleichzeitig muss dieser Motor auch in das mechanische Modell integriert werden. Auch wenn von der Mechanik her der Motortyp noch nicht genau spezifiziert ist, muss der Elektrokonstrukteur in der Lage sein, bei seiner Modellierung bereits ein Motormodul verwenden zu können. Dann entsteht aber gerade diese Problematik, dass in den verschiedenen Disziplinen unterschiedliche Motorausprägungen im Raum stehen, die es zu koordinieren gilt.

Das zweite Problem ist das Management von mechatronischen Modulen. Wie auch normale Baugruppen unterliegen mechatronische Module einem sogenannten Lebenszyklus. Dies bedeutet, dass sich auch diese mechatronischen Module mit der Zeit ändern, weil beispielsweise Probleme im Einsatz auftreten oder Komponenten abgekündigt werden. Dann muss es möglich sein, einerseits die Module abzuändern und andererseits aber alle Modelle äußerst effektiv und schnell nachzuziehen.

Ansätze mechatronischer Modularisierungen (wie Eplan-Engineering Center:
http://www.eplan.de/de/loesungen/mechatronik/eplanengineering-center/) berücksichtigen derzeit das Problem der mechatronischen Variabilität nur implizit über Regeln der verschiedenen Varianten. Lebenszyklusmanagement für mechatronische Module wird derzeit von keinem Tool unterstützt.

Ein weiterer Aspekt hier zielt auf die Tatsache, dass in Maschinenentwicklungsprozessen jede Disziplin, wie beispielsweise die mechanische Konstruktion, die Elektrokonstruktion oder die Automatisierung, heute jeweils durch eigene Software bei ihren Tätigkeiten unterstützt wird. Diese Softwaretools oder auch Applikationen sind heutzutage nicht oder nur rudimentär miteinander verbunden oder gekoppelt. Dies führt in einem Umfeld, geprägt von steigendem mechatronischem Denken zu immer größeren Schwierigkeiten im Umgang mit Änderungen, welche sich mechatronisch auswirken. Beispielsweise führt das Hinzufügen eines Sensors in der mechanischen Konstruktion dazu, dass dieser auch auf dem Schaltplan der Elektrokonstruktion berücksichtigt werden muss. Da die Tools heutzutage meist voneinander entkoppelt sind, werden solche Änderungen in einem Tool eingepflegt, in einem anderen aber (beispielsweise durch Unwissenheit des Benutzers) nicht nachgezogen. Dies führt zu inkonsistenten Informationen entlang eines Entwicklungsprozesses von Maschinen, was diesen lang andauernd und kostenintensiv werden lässt.

Bisher gibt es verschiedene Möglichkeiten, mechatronische relevante Informationen bzw. Änderungen an verschiedene Beteiligte zu kommunizieren. Einerseits können Änderungen manuell in Listen, beispielsweise Sensor-/Aktorlisten als Excellisten auf einem Laufwerk eingetragen und von allen Beteiligten im günstigsten Fall auf dem aktuellen Stand gehalten werden. Andererseits bieten die verschiedenen Tools Import und Export-Schnittstellen an, um die relevanten Informationen entsprechend zu kommunizieren.

Beiden Möglichkeiten ist gemein, dass eine Änderung entweder aktiv von Eintragenden an alle anderen kommuniziert werden oder sich vom jeweils "Betroffenen" aufgrund der zur Verfügung stehenden Dateien selbstständig geholt werden muss. Der Ansatz einer gemeinsamen Datenbank wäre prinzipiell denkbar, führt aber zum Ansatz, ein gesamtheitliches Tool für die Maschinekonstruktion zu bauen, worauf sich alle Teile verständigen müssen. Dies widerspricht dem Ansatz, die üblichen Tools der Disziplinen weiter zu nutzen und verwirft sehr viel existierendes, teures Disziplin-Know-how, das in diesen Tools codiert ist.

Es gibt bestehende Systeme, die eine gemeinsame Datenbank nutzen. Diese beschränken sich dann aber auf einen abgeschlossenen Teilbereich der beteiligten Disziplinen, etwa elektrische Konstruktion, Leitungsauslegungen und Schaltschrankaufbau (EPLAN-EEC, Zuken e³). Sie bieten keine umfassende Offenheit für weitere Disziplinen und lassen zum Beispiel Automatisierung, mechanische Konstruktion und virtuelle Inbetriebnahme aus.

Weiterhin versuchen einige Ansätze (wie beispielsweise Föderal, Eplan Engineeringcenter, ...) durch eine übergeordnete mechatronische Modellierung auf Basis einer sogenannten Bibliothek ganze Projekte zu bearbeiten. Dabei muss vorab die gesamte mechatronische Bibliothek aufgebaut und alle Beziehungen (bei Föderal auf einem semantischen Netz) definiert werden. Darauf aufbauend können Projekte generiert werden. Dadurch ist es aber nicht möglich, während der Entwicklung instanzspezifische Informationen, wie das Hinzufügen eines Signals direkt zu kommunizieren.

Die Aufgabe der vorliegenden Erfindung besteht somit darin, en Verfahren zum Herstellen einer Maschine bereitzustellen, das hinsichtlich Änderungen der Maschine sehr flexibel ist. Darüber hinaus soll eine entsprechende Vorrichtung bereitgestellt werden.

Erfindungsgemäß wird diese Aufgabe gelöst durch ein Verfahren zum Herstellen einer Maschine durch
- Entwerfen eines ersten und eines zweiten Modells jeweils vom mechanischen Typ, elektrischen Typ oder Automationstyp, wobei
- sich der Typ des ersten Modells von dem Typ des zweiten Modells unterscheidet, und wobei
- das erste Modell eine erste Komponente aufweist und das zweite Modell eine zweite Komponente, sowie
- Fertigen der Maschine entsprechend dem ersten und zweiten Modell,
- Festlegen einer Relation zwischen der ersten Komponente und der zweiten Komponente und
- Berücksichtigen der Relation bei dem Entwerfen mindestens eines der Modelle und/oder bei dem Fertigen der Maschine.

Darüber hinaus wird erfindungsgemäß bereitgestellt eine Vorrichtung zum Herstellen einer Maschine mit
- einer Entwurfseinrichtung zum Entwerfen eines ersten und eines zweiten Modells jeweils vom mechanischen Typ, elektrischen Typ oder Automationstyp, wobei
- sich der Typ des ersten Modells von dem Typ des zweiten Modells unterscheidet, und wobei
- das erste Modell eine erste Komponente aufweist und das zweite Modell eine zweite Komponente, sowie
- eine Fertigungseinrichtung zum Fertigen der Maschine entsprechend dem ersten und zweiten Modell,
wobei
- die Entwurfseinrichtung dazu ausgebildet ist, dass eine Relation zwischen der ersten Komponente und der zweiten Komponente festlegbar ist und
- die Entwurfseinrichtung dazu ausgelegt ist, die Relation bei dem Entwerfen mindestens eines der Modelle zu berücksichtigen, und/oder die Fertigungseinrichtung dazu ausgelegt ist, die Relation bei dem Fertigen der Maschine automatisch zu berücksichtigen.

In vorteilhafter Weise erfolgt also das Herstellen einer Maschine, indem zunächst mindestens zwei verschiedene Modelle aus unterschiedlichen Disziplinen entworfen werden. So ist das erste Modell beispielsweise ein Mechanikmodell (also vom mechanischen Typ) und das zweite Modell ein Elektrikmodell (also vom elektrischen Typ). Ein weiteres Modell kann vom Automationstyp bzw. Steuerungstyp sein. Das eigentliche Produzieren bzw. Fertigen der Maschine erfolgt dann entsprechend den entworfenen Modellen. Da die Modelle jedoch quasi synchronisiert werden müssen, und einzelne Komponenten der verschiedenen Modelle untereinander in Beziehung stehen, wird zwischen solchen in Beziehung stehenden Komponenten eine Relation festgelegt. Somit ergibt sich eine interdisziplinäre Verknüpfung der beteiligten Komponenten, also einer Relation zwischen einer Komponente des ersten Modells und einer Komponente des zweiten Modells. Diese Relation wird dann beim weiteren Entwerfen der Modelle oder aber beim Fertigen der Maschine berücksichtigt. Beim Entwerfen kann die Relation dazu dienen, Informationen aus dem einen Modell in das andere Modell automatisiert zu übernehmen. Beim Fertigen kann die Relation dazu dienen, die Stücklisten, die sich aus den unterschiedlichen Modellen ergeben, abzugleichen und/oder bei größeren Maschinen bzw. Anlagen die Konstruktion zu unterstützen.

Der Einsatzbereich der vorliegenden Erfindung ist sehr weitreichend. Grundsätzlich lässt sich damit beinahe jede Maschine herstellen. Besonders vorteilhaft ist natürlich die Herstellung von Sondermaschinen mit geringer Stückzahl. Bei diesen Maschinen ist der Entwicklungsaufwand gegenüber den übrigen Herstellungskosten verhältnismäßig hoch. Ein typisches Beispiel einer solchen Sondermaschine wäre eine Firmwarelademaschine, von der weltweit nur eine einzige hergestellt wurde. Eine weitere Möglichkeit für den Einsatz der vorliegenden Erfindung wäre bei der Herstellung von Maschinen denkbar, die zur Schleifwalzenproduktion dienen. Es können aber auch Großmaschinen und Anlagen von der Erfindung profitieren, wie etwa Reifenproduktionsmaschinen, Gepäckförderanlagen und dergleichen. Darüber hinaus können auch beispielsweise spezielle Roboter oder Werkzeugmaschinen mit dem erfindungsgemäßen Verfahren hergestellt werden.

Vorzugsweise wird der Relation eine Information betreffend den Typ der ersten und/oder zweiten Komponente oder aber beider Komponenten zugeordnet. Der Relation wird damit eine Semantik gegeben. Beispielsweise besitzt die Relation die Bedeutung "ist äquivalent zu". Oder sie besitzt eine der Bedeutungen "übergibt Material", "wird mechanisch implementiert durch", "kommuniziert über Signale" oder dergleichen. Damit stecken in der Beziehung der Komponenten der verschiedenen Modelle zusätzliche Informationen, die bei der Herstellung einschließlich der Erstellung der Stücklisten und der Inbetriebnahme verwendet werden können.

In einer Ausgestaltung ist die erste oder zweite Komponente vom Typ Baugruppe, Bauelement oder Bauelementeteil. Dies gilt entsprechend auch für die anderen Komponenten der jeweiligen Modelle. Es kann sich dabei um elektrische oder mechanische Bauelemente bzw. Baugruppen handeln.

In einer Ausprägung werden die beiden Modelle gleichzeitig grafisch dargestellt, und die Relation zwischen den beiden Komponenten wird grafisch unterstützt gesetzt. Dies kann beispielsweise durch eine Integrationsapplikation erfolgen, mit der Zugriff auf die Modelle mehrerer Disziplinen möglich ist. Die grafische Unterstützung erleichtert intuitiv das Verknüpfen der Komponenten durch entsprechende Relationen, die beispielsweise in Form von Pfeilen dargestellt werden.

Vorzugsweise wird eine Relation durch sogenanntes Ziehen und Ablegen (Drag and Drop) in einem Grafiktool gesetzt. Zieht (drag) dabei der Nutzer beispielsweise das Symbol der einen Komponente im einen Modell auf die andere Komponente in dem anderen Modell und legt sie dort ab (drop), so wird dies beispielsweise durch die Integrationsapplikation beispielsweise so interpretiert, dass zwischen beiden Komponenten eine Relation gesetzt werden soll.

Diese hat entweder eine vorgegebene Bedeutung oder es besteht die Möglichkeit, dieser Relation zusätzlich eine Semantik zuzuweisen.

Die beiden Komponenten einschließlich der Relation zwischen ihnen können in eine Bibliothek oder in ein semantisches Netz übernommen werden. Dies hat den Vorteil, dass so eine Komponente einschließlich ihrer einen oder mehreren Relationen bzw. Verknüpfungen als Modul in einer Bibliothek oder in einem semantischen Netz abgespeichert werden können. Für das spätere Entwurfsverfahren, wenn beispielsweise erneut solche Komponenten bzw. Module benötigt werden, oder für spätere Änderungen der Maschine kann so auf die jeweilige Bibliothek oder das jeweilige semantische Netz zurückgegriffen werden.

Entsprechend einer Weiterbildung kann die Relation auch direkt in einer Bibliothek oder einem semantischen Netz festgelegt werden. Sie wird also nicht in einem konkreten Modell sondern für die Allgemeinheit oder in dem disziplinübergreifenden semantischen Netz erst erstellt bzw. festgelegt, so dass bereits bei der ersten Verwendung einer betreffenden Komponente die interdisziplinären Zusammenhänge ersichtlich sind.

Bevorzugt kann die Wiederverwendung von Komponenten erleichtert werden. Beim Erzeugen einer dritten Komponente nämlich, die gleich der ersten Komponente ist, in dem ersten Modell kann automatisch eine der zweiten Komponente entsprechende vierte Komponente in dem zweiten Modell generiert und zusätzlich auch eine der Relation entsprechende weitere Relation zwischen der dritten und vierten Komponente durch Rückgriff auf die Bibliothek oder das semantische Netz gebildet werden. Bei der Vervielfältigung einer Komponente in einem Modell wird damit auch automatisch die jeweils zusammenhängende Komponente in dem anderen Modell sowie deren zweiseitige Beziehung zueinander mit vervielfältigt. Die Wiederverwendung von Komponenten bzw. Modulen hat damit interdisziplinäre Wirkung. Das Erzeugen der jeweiligen Komponenten kann ein Kopieren aus der Bibliothek oder dem semantischen Netz umfassen. Eine neue Komponente muss damit nicht im Einzelnen neu erstellt werden, sondern kann durch Anfertigen einer Kopie rasch vervielfältigt werden, wobei auch, wie oben erwähnt, die Relationen mitkopiert werden können.

In der Bibliothek oder einem semantischen Netz können zu einer Komponente auch mehrere Relationen gespeichert werden. Auch dies wurde bereits angedeutet. Hierdurch entsteht eine Verflechtung interdisziplinärer Art, die bei der Weiterentwicklung und bei Änderungen der Maschine sehr hilfreich sein können.

Günstigerweise wird bei Änderung der ersten Komponente in dem ersten Modell automatisch auch die zweite Komponente in dem zweiten Modell sowie gegebenenfalls deren Relation geändert. Wird beispielsweise der Motortyp im elektrischen Modell geändert, so wird dies auch im mechanischen Modell geändert. Gemäß einem anderen Beispiel wird ein Sensor in der Mechanik gelöscht, was dann auch in der Elektrotechnik nachgezogen werden muss (Löschen, Hinzufügen und Ändern von Komponenten). Beispielsweise kann auch ein Kühlaggregat in der Elektrotechnik gelöscht werden, was dann in der Mechanik nachzuziehen ist (Löschen, Hinzufügen und Ändern von Modulen). Dabei wird gegebenenfalls auch die ein oder andere Relation gelöscht.

Bei dem oben angesprochenen Kopieren einer Komponente bzw. eines Moduls kann eine Verbindung zwischen der Komponente bzw. dem Modul in der Bibliothek oder dem semantischen Netz und der kopierten Komponente in dem jeweiligen Modell gespeichert werden. Dies bedeutet, dass eine Verbindung bzw. Relation zwischen der Bibliothek und dem Modell, in das die Komponente kopiert wurde, erzeugt und abgelegt wird. Ein solcher Bezug vom Modell zur Bibliothek kann wichtig sein, wenn später die Bibliothek oder das Modell geändert wird und die ursprüngliche Modellierung nachvollzogen werden soll.

Gemäß einer weiteren Ausführungsform soll bei einer Veränderung einer der Komponenten in der Bibliothek die ursprüngliche Komponente, zu der die Verbindung besteht, in der Bibliothek gespeichert bleiben. Damit sind zu jedem Zeitpunkt die jeweils erstellten und geänderten Modelle nachvollziehbar.

Durch eine Relation kann eine Äquivalenz zwischen den jeweils betroffenen Komponenten hergestellt werden. Durch diese Relation wird zum Ausdruck gebracht, dass eine Komponente in einem Modell äquivalent zu einer anderen Komponente in dem anderen Modell ist. Wird nun die eine Komponente weiter spezifiziert, so wird dies aufgrund der Relation vorzugsweise auch in dem anderen Modell nachgezogen. Diese Äquivalenzrelation kann aber auch dazu genutzt werden, um auf eine Datenbank zurückzugreifen, in der ein äquivalenter Sensor gefunden werden soll.

Das Festlegen der Relation kann automatisch durch Analyse der Modelle erfolgen. Wird beispielsweise bei der Analyse der Modelle festgestellt, dass lediglich ein einziger Motor verbaut ist, so muss dieser in einer Komponente des mechanischen Modells und äquivalent hierzu auch in dem elektrischen Modell einen Niederschlag finden.

Die oben in Zusammenhang mit dem erfindungsgemäßen Verfahren geschilderten Merkmale können auch als funktionelle Merkmale der erfindungsgemäßen Vorrichtung gesehen werden, wenn sie entsprechend als Funktionen der Entwurfseinrichtung oder der Fertigungseinrichtung realisiert werden.

Die vorliegende Erfindung wird nun anhand der beigefügten Zeichnungen näher erläutert, in denen zeigen:
- FIG 1: eine Implementierung zur Erstellung mechatronischer Objekte;
- FIG 2: einen Ablauf zur Nutzung mechatronischer Objekte;
- FIG 3: interdisziplinäre Informationen auf einer Ebene;
- FIG 4: das Entstehen mechatronischer Objekte während eines Entwicklungsdurchlaufs;
- FIG 5: eine Architektur mechatronischer Objekte;
- FIG 6: Repräsentationen eines Motors im mechanischen CAD und elektrischen CAD;
- FIG 7: unterschiedliche semantische Beziehungen auf Bibliotheksseite, um interdisziplinäre Variabilität zu erreichen;
- FIG 8: eine Instanziierung von mechatronischen Bibliothekselementen;
- FIG 9: eine Informationsüberschneidung einzelner Applikationen;
- FIG 10: ein semantisches Netz zum Austausch von interdisziplinär relevanten Informationen zwischen Applikationen;
- FIG 11: ein semantisches Netz zur Identifikation interdisziplinär relevanter Instanzen;
- FIG 12: das Löschen eines Sensors durch die Elektrotechnik und deren Auswirkungen in der Mechanik;
- FIG 13: User-Interfaces, welche spezifische interdisziplinär relevante Informationen in disziplinspezifischen Applikationen darstellen; und
- FIG 14: eine Beziehung der konkreten Ausgestaltung zum Systementwurf und die Ableitung von systementwurfstechnischen Relationen in die konkrete Ausgestaltungsphase.

Die nachfolgend näher geschilderten Ausführungsbeispiele stellen bevorzugte Ausführungsformen der vorliegenden Erfindung dar. Dabei ist zu beachten, dass die einzelnen Merkmale nicht nur in den geschilderten Kombinationen, sondern auch in Alleinstellung oder anderen technisch sinnvollen Kombinationen realisiert werden können.

Es soll eine Maschine bzw. eine Anlage, z. B. eine Werkzeugmaschine oder ein Roboter, (nachfolgend einfach Maschine genannt) hergestellt werden. Dazu ist es notwendig, diese Maschine zunächst zu entwerfen und den resultierenden Entwurf entsprechend zu fertigen.

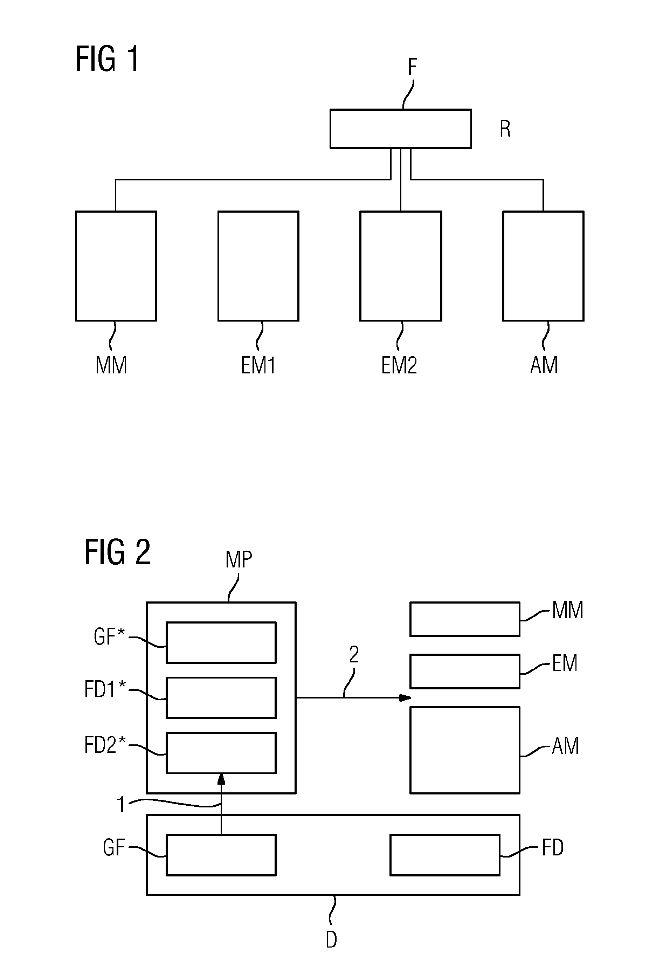

Ausgangspunkt für den Entwurf ist eine mechatronische Modularisierung, wonach Modelle der Mechanik, der Elektrik und der Automatisierung über einen "funktionalen" Zusammenhang zusammengestellt werden. Dies ist in FIG 1 aufgezeigt. Beispielsweise soll die Funktion F "Greifer" technisch realisiert werden. Dazu wurden bislang die disziplinspezifischen Modelle (mechanisches Modell MM, erstes elektrisches Modell EM1, zweites elektrisches Modell EM2 und Automatisierungsmodell AM) auf mechatronische Abhängigkeiten aufwendig untersucht und die entsprechenden Parameter der Funktion zugeführt. Beispielsweise wird die Länge des Greifers als Parametrierung an die Funktion F geschrieben. Abhängig von diesen Parametern werden Regeln R in den disziplinspezifischen Modellen MM, EM1, EM2 und AM definiert, wie beispielsweise dass ab einer Länge von 1 m nicht mehr das elektrische Modell EM1 sondern das zugehörige Modell EM2 genutzt werden muss. Es ist offensichtlich, dass es enorm aufwendig ist, alle nur erdenklichen Regeln vorab zu definieren, um mechatronische Module zu beschreiben.

Zur Nutzung solcher in FIG 1 beispielhaft dargestellten Module (es müssen nicht genau die aufgeführten Modelle enthalten sein; in der Regel ist mindestens ein mechanisches Modell, ein elektrisches oder ein Automatisierungsmodell vorhanden) im Falle einer Maschinenentwicklung bzw. Auftragsabwicklung sollten die beschriebenen Module gemäß FIG 2 in einer Datenbank D abgelegt werden. Im Beispiel von FIG 2 ist in der Datenbank D ein Modul für einen Greifer GF und ein Modul für einen Förderer FD hinterlegt. Beim Anlegen eines Maschinenprojekts MP werden die verschiedenen Funktionen bzw. Module instanziiert, was durch den Pfeil 1 angedeutet ist. Im vorliegenden Fall wird ein Greifer GF*, ein erster Förderer FD1* und ein zweiter Förderer FD2* instanziiert. Anschließend erfolgt eine Parametrierung, aufgrund deren in allen Tools (beispielsweise mechanisches CAD, elektrisches CAD und Automatisierungsprogrammierumgebung wie beispielsweise TIA-Portal) die jeweiligen Modelle MM, EM und AM generiert werden, was Pfeil 2 andeutet.

Diesen Ansatz verfolgen verschiedene Projekte, Produkte und Standards (vgl. VDW-Richtlinie "Funktionsbeschreibung"; Förderal-Projekt des VDMA - http://www.vdma-verlag.com/home/p105.html).

In allen Fällen müssen bei einer auftragsbezogenen Zusammenstellung quasi alle Module vorab entsprechend definiert sein, was zu oben genannten Problemen führt. Erfindungsgemäß wird nun dem eine Abhilfe geschaffen, indem eine oder mehrere interdisziplinäre Relationen zwischen den Modellen geschaffen werden. Der Grundgedanke der vorliegenden Erfindung besteht also darin, dass bei der Herstellung von Maschinen interdisziplinäre Verbindungen zwischen den Komponenten der verschiedenen Modelle genutzt werden können, also zwischen einem mechanischen Modell, elektrischen Modell und/oder Automatisierungsmodell oder mehreren davon. Bereits beim Entwurf sollten in möglichst vielen Schritten sowohl mechanische und elektrische als auch automatisierungstechnische Gegebenheiten berücksichtigt werden.

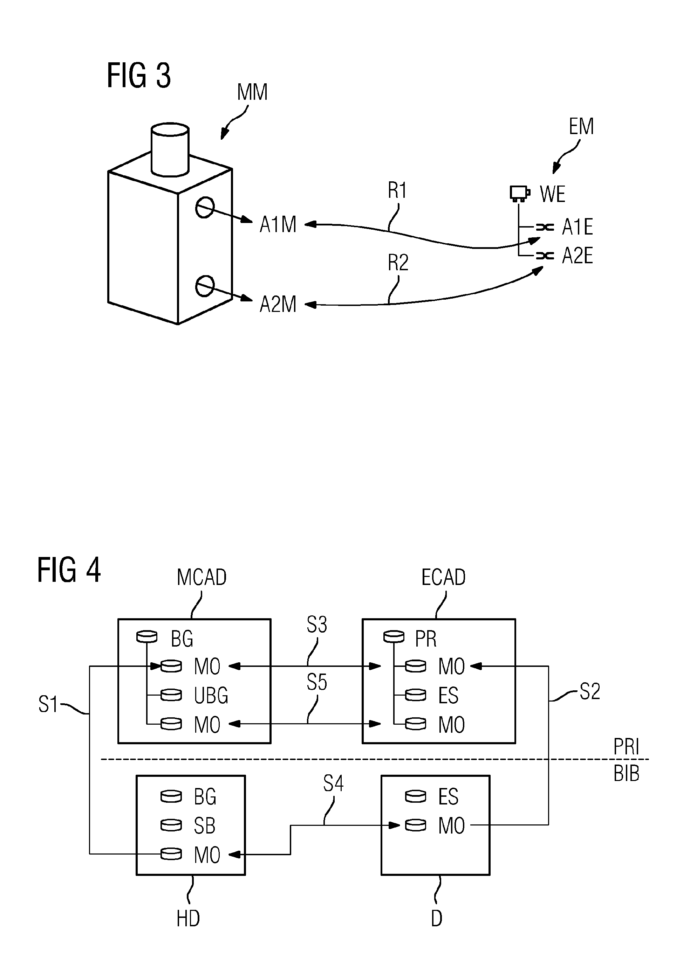

Es können also beispielsweise auf Basis eines definierten semantischen Netzes (was später noch beschrieben wird) eine oder mehrere Relationen R1, R2 zwischen interdisziplinären Informationen gezogen werden, wie FIG 3 zeigt. Dieses Beispiel veranschaulicht solche Relationen R1 und R2 exemplarisch an Anschlüssen A1M, A2M vom mechanischen Modell MM und A1E, A2E vom elektrischen Modell EM. In dem elektrischen Modell EM sind die Anschlüsse A1E und A2E einem Wirkelement WE zugeordnet.

Ein weiterer Anwendungsfall solcher Relationen kann sich, wie eingangs erwähnt, auf Komponenten wie Motoren beziehen. Damit es für die mechatronische Infrastruktur möglich ist, beispielsweise das konkrete Problem der mechatronischen Stückliste zu lösen, dürfen die verwendeten Relationen zwischen Komponenten unterschiedlich zu denjenigen Relationen R1, R2 zwischen Anschlüssen sein. Dieser Unterschied wird vorzugsweise über die Semantik der Relationen definiert, worauf später noch weiter eingegangen wird. Die Semantik (Bedeutung) der Relation zwischen Komponenten kann somit beispielsweise "ist äquivalente Komponente zu" sein, während für die Anschlüsse die Relationen mit der Semantik "ist äquivalenter Anschluss" gilt.

Die Relationen werden beispielsweise mit Hilfe von sogenannten UIs (User-Interface) gezogen, wie es beispielsweise in FIG 3 dargestellt ist. Dabei wird eine interdisziplinäre Information einfach per "Drag&Drop" auf das entsprechend semantisch korrekte äquivalente Objekt in der Applikation gezogen. Beispielsweise wird der Anschluss A1M des mechanischen Modells MM auf den äquivalenten Anschluss A1E des elektrischen Modells EM gezogen und dort fallengelassen bzw. abgelegt. Dadurch entsteht hier die Relation R1, die die Äquivalenz der beiden A1M und A1E bedeutet. Diese Relation wie auch die anderen können in einem semantischen Netz hinterlegt werden zusammen mit den jeweiligen Komponenten (semantische Objekte), die damit verbunden werden. Diese semantischen Objekte und Relationen werden durch eine sogenannte Integrationsapplikation gemanagt bzw. editiert.

Vorteilhafterweise werden also interdisziplinäre, über Softwaretoolgrenzen hinweg gezogene Relationen geschaffen, welche vorab fest oder auch variabel, semantisch eindeutig beschrieben sind. Dadurch lassen sich Auswertungen in einem mechatronischen Kontext des Maschinenprojekts automatisieren. Dies ermöglicht eine sofortige Systemunterstützung bei Änderungen interdisziplinärer Informationen, was zu Informationskonsistenz führt.

Die mechatronische Integrationsapplikation kann dazu genutzt werden, dass mechatronische Module während eines Projekts durch einfache Verlinkung von Informationen entstehen. Mechatronische Objekte entstehen während eines normalen mechatronischen Entwicklungsdurchlaufs beispielsweise dadurch, dass disziplinspezifische Applikationen über die Integrationsapplikation interdisziplinäre Informationen erkennen und diese dem Nutzer bereitstellen. Aufbauend darauf kann der Nutzer diese mit seinem Modell erfinden, was nun im Zusammenhang mit FIG 4 näher erläutert wird.

In FIG 4 ist ein einfaches mechatronisches Objekt bzw. Modul dargestellt. Das mechanische Modell wird in dem MCAD-System als Baugruppe BG dargestellt, die zwei Motoren MO und eine Unterbaugruppe UBG aufweist. Das korrespondierende elektrische Modell besitzt in dem ECAD-System als übergeordnete Einheit ein Projekt PR mit zwei Motoren MO und einer Einspeisung ES. Diese Modelle ergeben sich in der Ebene der Projektinstanziierung PRI. In einer Bibliotheksebene BIB ist beispielsweise in einer mechanischen Bibliothek auf Festplatte HD eine Baugruppe BG, eine Schraube SB und ein Motor MO jeweils als mechanische Komponente hinterlegt. In ähnlicher Weise befindet sich in einer Datenbank D für elektrische Komponenten eine allgemeine Modellierung einer Einspeisung ES und eines Motors MO.

Während eines Entwicklungsdurchlaufs wird nun das mechatronische Objekt beispielsweise wie folgt generiert. In einem ersten Schritt S1 erfolgt eine erstmalige Instanziierung eines spezifischen Motors in der Mechanik. Im weiteren Schritt S2 erfolgt eine Instanziierung eines Motors in der elektrischen Konstruktion beispielsweise aufgrund eines Hinweises in der Integrationsapplikation. Anschließend werden gemäß Schritt S3 die Motoren MO über die Integrationsapplikation manuell einmalig verknüpft. Automatisch entsteht dadurch gemäß Schritt S4 auch auf Bibliotheksseite BIB eine Verknüpfung zwischen den dortigen Motoren MO. Eine weitere Instanziierung des Motors MO (egal ob in der Elektro- oder Mechanikkonstruktion) führt nun gemäß Schritt S5 zu einer gleichzeitigen Instanziierung in beiden Tools MCAD und ECAD. Durch das Verbinden von Komponenten der einzelnen Modelle entstehen also definierte semantische Zusammenhänge zwischen Disziplinen. Im einfachsten Fall ist ein solcher Zusammenhang die Äquivalenz zwischen zwei Objekten. Dadurch entsteht wie in FIG 4 dargestellt ein einfaches mechatronisches Objekt.

Komplexere Objekte bzw. Module verlangen weitere Mechanismen. Hierzu kann man sich verschiedene Abstraktionsebenen des Systementwurfs zunutze machen. Wird ein Wirkprinzip im laufenden Projekt definiert und diesem die entsprechenden Modelle der Disziplinen zugewiesen, so entsteht in der mechatronischen Integrationsapplikation ein Ausschnitt eines semantischen Netzes. Dieser kennt nicht nur die disziplinspezifischen Modelle, sondern auch deren Abhängigkeiten und im Speziellen die Verbindung zum entsprechenden Systementwurf. So kann sehr schnell und einfach im Rahmen eines Entwicklungsprojekts ein mechatronisches Modul entstehen.

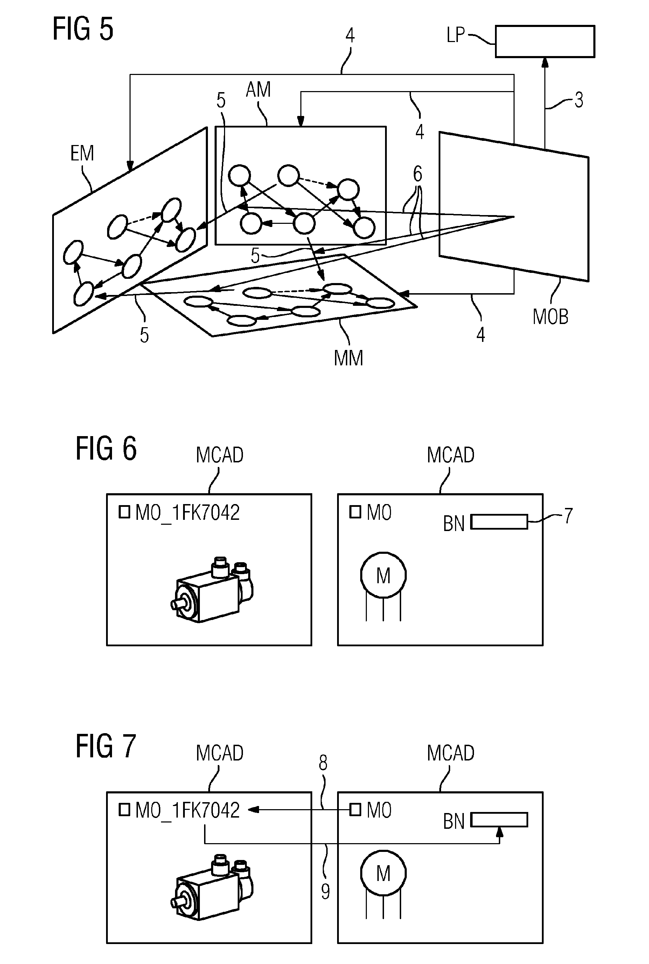

In FIG 5 ist ein mechatronisches Modul bzw. mechatronisches Objekt MOB dargestellt. Es steht vorzugsweise mit einem logischen Objekt LP (Lösungsprinzip) durch eine Relation 3 in Verbindung. Dieses Lösungsprinzip LP dient gleichzeitig zur Klassifizierung und bildet eine erste Information über das mechatronische Objekt MOB. Das mechatronische Objekt MOB selbst "kennt" die ihm zugehörigen Teilmodelle MM, EM und AM, wobei die Anzahl der Modelle beliebig sein kann, aber in der Praxis in der Regel bei zwei oder drei liegt. Das "Kennen" ist in FIG 5 beispielsweise durch den Relationstyp 4 "gehört zu" ausgedrückt.

Die Verbindungen 5 zwischen den Modellen MM, EM und AM sind in der Regel auch essentiell. Dadurch kann eine schnelle Einpassung in ein neues Projekt gewährleistet und Änderungen bzw. Löschungen nachvollzogen werden, um ein konsistentes Projekt zu erhalten. Außerdem ist eine nahtlose Weiterverwendung von Informationen direkt möglich. Das mechatronische Objekt MOB sollte folglich die Relationen 5 zwischen den Modellen kennen, was wiederum durch die Relationen 6 dargestellt ist. Diese Relationen werden vorzugsweise in einem semantischen Netz gespeichert. Daraus kann abgeleitet werden, dass ein mechatronisches Objekt MOB im Wesentlichen ein Ausschnitt eines semantischen Netzes zuzüglich der privat zugewiesenen Informationen der Applikationen darstellt. Jede Disziplin bzw. Applikation repräsentiert mit seinem Modell und dem zugehörigen Ausschnitt des semantischen Netzes seine eigene Facette im mechatronischen Objekt. Das mechatronische Objekt an sich kennt somit alle Facetten sowie die Relationen zwischen diesen.

Eine weitere Eigenschaft dieser Architektur mechatronischer Objekte ist, dass die Systemgrenzen der verschiedenen Disziplinen nicht zwingend übereinander liegen müssen (s.u.) Weiterhin ermöglicht die Integrationsapplikation eine Prüfung der interdisziplinären Konsistenz. So ist beispielsweise ein Mechanismus eingebaut, welcher automatisch beispielsweise in der elektrotechnischen Sichtweise Motoren hinzufügt, welche bereits in der Mechanik hinzugefügt worden sind. Die Kenntnis der Verbindung der einzelnen disziplinspezifischen Modelle zum Lösungsprinzip/zur Funktion kann gleichzeitig in der Bibliothek der Integrationsapplikation als Klassifizierung genutzt werden.

In vorteilhafter Weise kann somit eine mechatronische Integrationsapplikation nicht nur auf Bibliotheks-Datenbankseite sondern auch auf Instanzebene eine mechatronische Kollaboration ermöglichen. Hieraus ergeben sich viele Vorteile in mechatronischen oder gar multidisziplinären Projekten. Beispielsweise ist jede Disziplin in ihrer Modellierung frei, kann aber Abhängigkeiten untereinander ziehen. Außerdem können Module während eines herkömmlichen Entwicklungsablaufes ohne großen zusätzlichen Aufwand entstehen und müssen nicht vorab definiert werden. Auch eine Moduldefinition ist nicht an vorab definierte Standards gebunden. Ferner können Änderungen der abgelegten Module im Sinne eines Produkt Lifecycle Managements auf alle Instanzen ausgerollt werden. Interdisziplinär relevante Änderungen an Informationen können außerdem sofort an alle beteiligten Disziplinen und an alle User kommuniziert werden. Dadurch lassen sich Informationsinkonsistenzen verhindern, Kommunikationsbrücken bauen und viel Entwicklungsaufwand bei interdisziplinären Projekten einsparen.

Interdisziplinäre Relationen sind auch im Hinblick auf die eingangs erwähnte interdisziplinäre Variabilität von Bedeutung. FIG 6 zeigt beispielhaft eine Repräsentation eines Motors MO_1FK7042. Dieser ist exakt definiert. Auf der rechten Seite ist die Modellierung der Elektrokonstruktion ECAD zu sehen. Dabei ist der Motor MO erst exakt definiert, wenn die Bestellnummer BN, beispielsweise "1FG7042" in das Textattribut 7 geschrieben wird. Davor ist das Symbol in ECAD gültig für viele Motoren mit 3-phasigem Anschluss. Die Problematik beim Schneiden von mechatronischen Modulen liegt nun gerade hierin. Es sollte für den Elektrokonstrukteur möglich sein, das Symbol des Motors dem zu entwickelnden Modul zuzuweisen, obwohl dieses noch nicht ausspezifiziert ist und somit beispielsweise in der Mechanikkonstruktion MCAD noch keine Repräsentanz besitzt. Dennoch sollte es möglich sein, dem Mechaniker bei Instanziierung des Moduls mitzuteilen, dass hier noch ein Motor auszulegen und einzubauen ist.

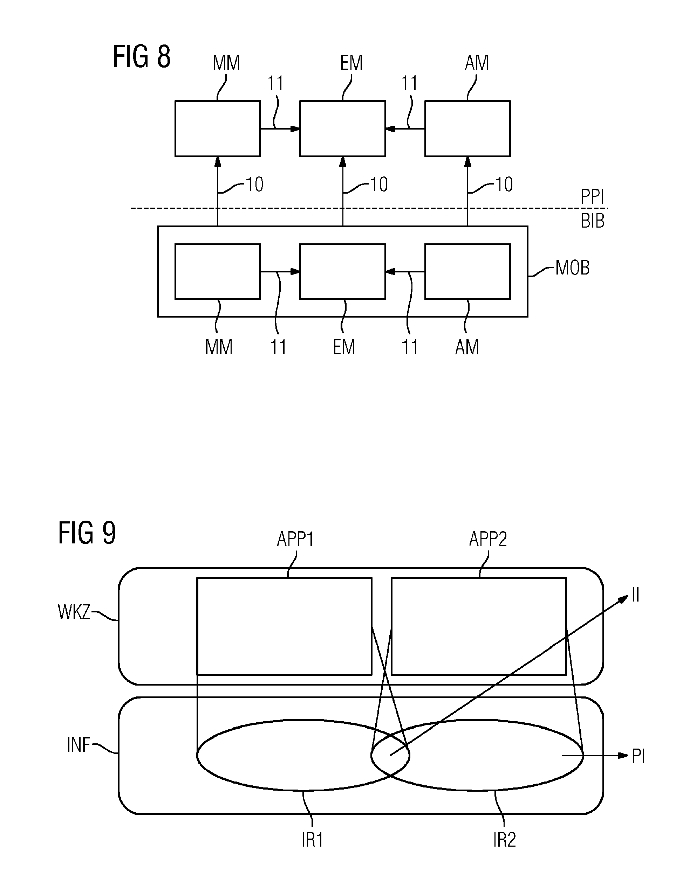

FIG 7 zeigt eine Lösung zur Behebung des Problems der mechatronischen Variabilität. Zwischen die Objekte bzw. Komponenten (Motor MO) beispielsweise der Mechanikkonstruktion MCAD und Elektrikkonstruktion ECAD sind Relationen 8 und 9 mit Hilfe der mechatronischen Integrationsapplikation gezogen. Diese müssen wieder semantisch korrekt beschrieben sein, z. B. "wird implementiert durch" bei Relation 8 und "ist äquivalente Komponente" bei Relation 9. Diese semantischen Beschreibungen werden gemäß FIG 8 vorzugsweise auf Bibliotheksseite BIB gezogen (Relationen 11) und auf Projekt- bzw. Instanzseite PRI mit instanziiert (vgl. Instanziierungspfeile 10).

Bei der Instanziierung eines Moduls MOB werden günstigerweise gleichzeitig Verbindungen zum Bibliotheksobjekt gehalten, um Änderungen des Bibliotheksobjekts in verschiedenen Projekten und Disziplinen nachverfolgen zu können. Weiterhin sollte eine Klassifizierung solcher Bibliothekselemente in der Integrationsapplikation möglich sein, um Module schnell und einfach zu finden.

In vorteilhafter Weise ermöglichen somit semantisch korrekte Relationsbeschreibungen auf Bibliotheksseite sowie zu den einzelnen Instanzen ein Management des Lebenszyklus von mechatronischen Modulen. Weiterhin ist es möglich, eine Variabilität in die Modulbildung aufgrund der semantischen Relationen einzubringen, was vorher nur über die Definition von Regeln möglich war.

FIG 9 zeigt exemplarisch zwei Applikationen APP1 und APP2 in einer Werkzeugebene WKZ. In einer Informationsebene INF ist ein der ersten Applikation APP1 zugeordneter erster Informationsraum IR1 und ein der zweiten Applikation APP2 zugeordneter zweiter Informationsraum IR2 dargestellt. Die beiden Informationsräume IR1 und IR2 beinhalten sogenannte "private" Informationen PI der jeweiligen Tools. Darüber hinaus überschneiden sich die beiden Informationsräume IR1 und IR2 in einem Schnittbereich, der sogenannte "interdisziplinäre Informationen" II enthält.

Auch wenn in dem Beispiel von FIG 9 nur zwei Applikationen und zwei Informationsräume dargestellt sind, kann deren jeweilige Anzahl natürlich auch höher sein. Gegebenenfalls überschneiden sich dann die Informationsräume mehrfach.

Die auszutauschenden Informationen zwischen den Applikationen APP1 und APP2 können durch eine Analyse der verwendeten Modellierungen gewonnen werden. Da jede Applikation APP1, APP2 ihren eigenen Informationsraum IR1, IR2 aufspannt, sind alle interdisziplinär relevanten Informationen II in den überlappenden Gebieten zwischen verschiedenen Informationsräumen zu finden.

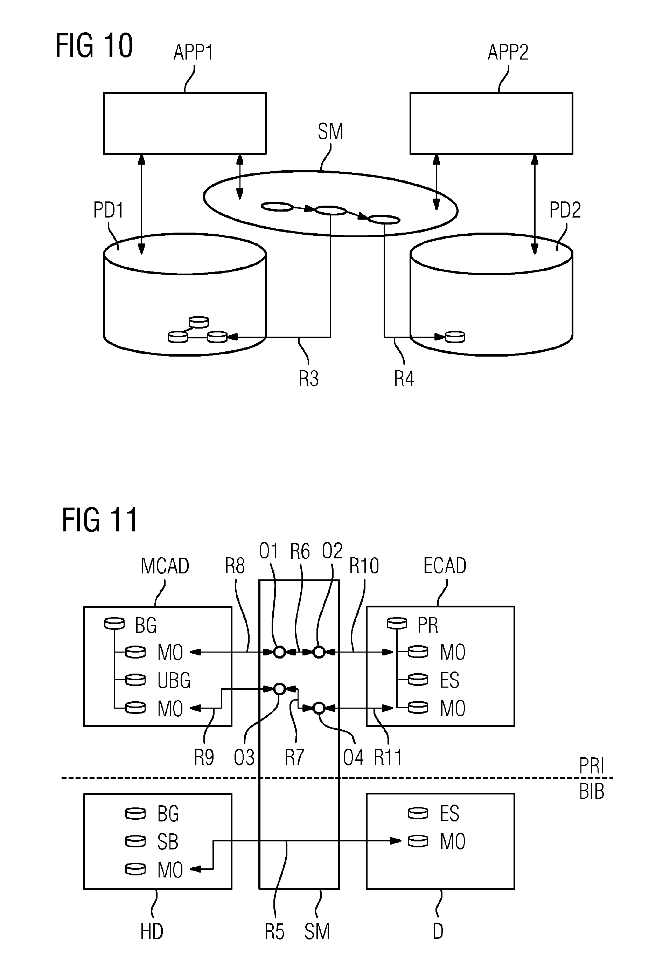

Weiterhin sind manche interdisziplinär relevanten Informationen nicht explizit in verschiedenen Tools bzw. Applikationen modelliert. Diese wurden zusätzlich aus einer methodischen Analyse gewonnen. Beides zusammen kann in einem semantischen Netz SM modelliert werden. Dieses wird dann dazu genutzt, um die entstehenden Informationen bei Entstehen in der jeweiligen Applikation APP1, APP2 jeweils an die andere bzw. an die anderen weiterzugeben, wie dies in FIG 10 angedeutet ist. Aus der dortigen Abbildung geht hervor, dass die erste Applikation APP1 (z. B. Elektrokonstruktion) Zugriff auf ihre proprietäre Datenhaltung PD1 und die zweite Applikation APP2 (z. B. Mechanikkonstruktion) Zugriff auf ihre proprietäre Datenhaltung PD2 hat. Ferner können Relationen von Objekten des semantischen Netzes SM zu Objekten in den proprietäre Datenhaltungen PD1 und PD2 bestehen.

Beispielsweise ist ein Sensor in der Mechanik nur mittels seiner Geometrie und seiner Bestellnummer modelliert. Dies würde bei Instanziierung eines Sensors bewirken, dass eine Bestellnummer in das gemeinsame semantische Netz SM geschrieben wird. Aufgrund des Typs Bestellnummer ist der Applikation der Elektrik bekannt, dass diese für ihn relevant ist. Sie kann nun bei sich in der Artikeldatenbank (z. B. proprietäre Datenhaltung PD1) einen Abgleich vornehmen, um dort eventuell den äquivalenten Sensor zu finden, oder diesen dort nachzutragen. Dadurch bleiben die proprietären Datenhaltungen PD1, PD2 der Tools APP1, APP2 vorhanden. Lediglich das semantische Netz SM verbindet beides. Für jedes Maschinenprojekt existiert ein semantisches Netz SM, welches von einer sogenannten Integrationsapplikation gemanagt wird.

Ein wesentlicher Vorteil des semantischen Netzes besteht darin, dass proprietäre Daten der Tools veröffentlicht bzw. allgemein zugänglich gemacht werden. Das semantische Netz speichert hierbei im Wesentlichen nur die Semantik der Information auf Instanzebene und kennzeichnet diese beispielsweise eindeutig mittels GUID (Global Unique Identifier), um diese wiederzufinden. Dadurch ist es möglich, das Hinzufügen, Ändern und Löschen von interdisziplinären Informationen über Toolgrenzen zu erkennen und zu kommunizieren. Folglich kommuniziert das System diese Ereignisse automatisch, ohne dass die disziplinspezifischen Tools ihr Datenformat ändern müssen. Weiterhin ermöglicht dieser Mechanismus die eindeutige Identifikation von Instanzen in einem Projekt.

In FIG 11 ist eine Projektinstanziierung PRI und eine Bibliothek BIB jeweils für ein mechanisches Konstruktionssystem und ein elektrisches Konstruktionssystem wie in FIG 4 dargestellt. FIG 11 zeigt nun aber den Unterschied zwischen einer Verknüpfung bzw. Relation R5 auf Bibliotheksseite BIB (vgl. Föderal) und Instanzseite PRI. Wird beispielsweise ein Motor auf Bibliotheksseite BIB sowohl in der Mechanik als auch der Elektrik verknüpft (Verknüpfung R5), so ist dieser auf der Instanzebene PRI nicht mehr eindeutig identifizierbar, falls er wie in dem Beispiel zweimal instanziiert wurde. Eine eindeutige Identifikation auf Instanzebene PRI ist hier nur durch das semantische Netz SM möglich, in dem die jeweiligen Motoren als Objekte O1, 02, 03 und 04 hinterlegt sind. Außerdem sind in dem semantischen Netz SM die Relationen R6, R7 zwischen den einzelnen Objekten O1, 02 bzw. 03, 04 sowie die Relationen R8 bis R11 der einzelnen Objekte O1 bis 04 zu den Objekten in den Tools abgelegt. Damit lässt sich eine eindeutige Identifizierung der Instanzen realisieren. Diese eindeutige Identifikation auf Instanzebene ermöglicht eine Parallelisierung von Disziplinen in Entwicklungsprozessen, da alle Änderungen ohne Zeitverzug kommuniziert und eindeutig vom System identifiziert werden können. Dies führt zu einer Informationskonsistenz entlang des Entwicklungsprozesses.

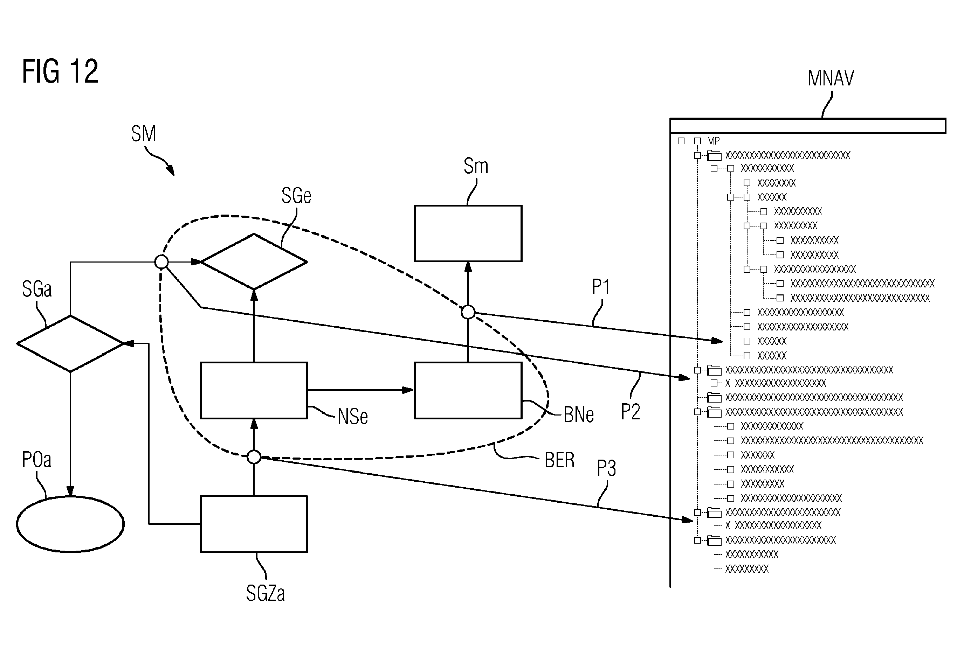

Ein Beispiel für die Nutzung des semantischen Netzes im Entwicklungsprozess ist in FIG 12 wiedergegeben. Das Beispiel zeigt einen Ausschnitt aus einem semantischen Netz SM und bezieht sich auf das Löschen eines Sensors durch die Elektrotechnik und deren Auswirkungen in der Mechanik.

In dem semantischen Netz ist beispielsweise aus der Automatisierung ein Objekt "Sensor-Greifer-Zu" SGZa abgespeichert. Mit einer Relation "äquivalente Repräsentation in ECAD" weist das Automationsobjekt SGZa auf einen Näherungsschalter NSe in der Elektrik. Dieser weist über die Relation "ist bestellbar über" auf eine Bestellnummer BINe in der Elektrik. Diese wiederum besitzt die Relation "ist äquivalente Komponente zu" zu dem mechanischen Sensor Sm.

Das Automatisierungsobjekt SGZa besitzt die Relation "gibt aus" auf ein Signal SGa in der Automatisierung. Dieses besitzt beispielsweise den Inhalt "Greifer geschlossen". Ferner besitzt es die Relation "repräsentiert" zu einer Position POa in der Automatisierung. Diese besitzt beispielsweise den Inhalt "Greifer zu". Außerdem weist eine Relation des Signals SGa auf ein Signal SGe der Elektrik. Auf dieses Signal SGe weist beispielsweise auch der Näherungsschalter NSe aus der Elektrik.

Während in dem User-Interface von FIG 12 auf der linken Seite das semantische Netz SM dargestellt ist, ist rechts eine Navigatorleiste für mechanische Navigation MNAV wiedergegeben. Dort ist ein Maschinenprojekt MP mit seinen Komponenten und Subkomponenten abgebildet.

Wird nun in der Elektrik der Sensor und damit der Bereich BER gelöscht, so hat dies nach außen hin Auswirkungen beispielsweise auf die Mechanik. Diese Auswirkungen sind in FIG 12 mit Pfeilen P1, P2 und P3 vom semantischen Netz SM in die Navigatorleiste symbolisiert. Mit dem Löschen in der Elektrik werden damit auch automatisch Komponenten bzw. Subkomponenten in der Mechanik gelöscht.

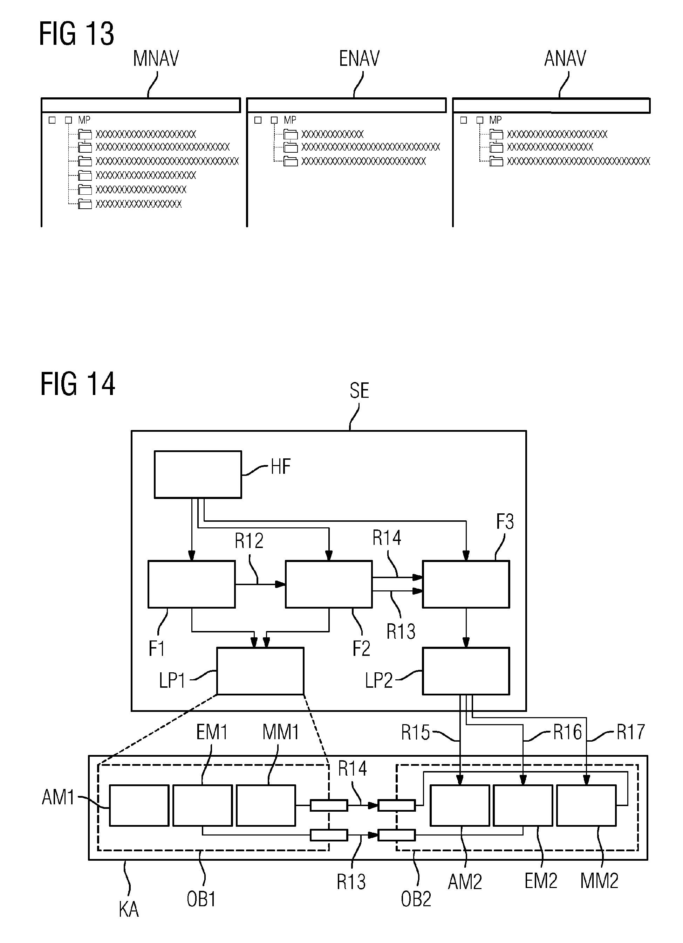

Damit neben den "überlappenden" Informationen (vgl. FIG 9) auch die weiteren interdisziplinär relevanten Informationen den Nutzern für ihre Aufgaben dargestellt werden können, müssen diese auch visualisiert werden. Dazu werden die Applikationen mit entsprechenden Navigatoren-UIs erweitert, wie dies FIG 13 zeigt.

Auf ein Maschinenprojekt MP gibt es mindestens eine, in der Regel aber drei verschiedene Sichten: Mechanik, Elektrik und Automatisierung. Jede dieser Disziplinen nutzt eigens auf ihre Bedürfnisse abgestimmte Tools. Damit diese aber an den interdisziplinär relevanten Informationen partizipieren können, gibt es nun z.B. hierauf abgestimmte Navigatoren MNAV, ENAV und ANAV, welche die interdisziplinär für diese Disziplin relevanten Informationen darstellen können. Diese Navigatoren können direkt im disziplinspezifischen Tool oder aber an zentraler Stelle in einem separaten Tool implementiert sein. Gleichzeitig können diese Navigatoren die entsprechenden Informationen mit dem disziplinspezifischen Modell in verschiedenen Art und Weisen verbinden. So kann der disziplinspezifische Nutzer bereits existierende Objekte mit seinen verbinden.

Alle interdisziplinär relevanten Informationen und Änderungen können mit diesen Navigatoren aufgezeigt werden. Neben dem reinen Anzeigen ist es gegebenenfalls möglich, beispielsweise Informationen direkt in die disziplinspezifischen Planungen zu übernehmen oder zu verknüpfen. Angezeigte Änderungen können angenommen (führt zu automatischer Änderung disziplinspezifischer Daten), zurückgegeben (Zurücksenden der Änderung in das semantische Netz) oder abgelehnt (bewusstes Zulassen von Inkonsistenzen) werden.

Kommt man nun zurück auf das Problem, dass sich Änderungen auf Systemsentwurfsebene nicht immer in der Ausgestaltungsphase erkennen lassen, so lässt sich darlegen, dass die Wirkung von Relationen hier deutliche Vorteile bringen kann. Anders als bei früheren Ansätzen wird zur Lösung dieses Problems (Nachverfolgung bereits getroffener systementwurfstechnischer Modellierungen und deren Änderungen) den einzelnen Relationen bzw. Verbindungen der konkreten Ausgestaltung zum Systementwurf eine Semantik hinzugefügt, wie dies in FIG 14 dargestellt ist.

Auf einer Ebene des Systementwurfs SE ist eine Hauptfunktion HF definiert. Sie lässt sich unterteilen in eine erste Funktion F1, eine zweite Funktion F2 und eine dritte Funktion F3. Beispielsweise besteht zwischen den Funktionen F1 und F2 eine Relation R12 und zwischen den Funktionen F2 und F3 die Relation R13. Beiden Relationen ist beispielsweise die Bedeutung "kommuniziert über Signale" zugewiesen. Außerdem besteht eine Relation R14 zwischen den Funktionen F2 und F3. Auch dieser Relation R14 kann eine Bedeutung zugeordnet werden, beispielsweise "übergibt Material". Die beiden Funktionen F1 und F2 können mit dem Lösungsprinzip LP1 gelöst werden, während die Funktion F3 mit dem Lösungsprinzip LP2 gelöst wird.

Auf der Ebene der konkreten Ausgestaltung KA wird das erste Lösungsprinzip LP1 durch ein erstes Objekt OB1 realisiert. Dieses Objekt OB1 besitzt ein Automatisierungsmodell AM1, ein elektrisches Modell EM1 und ein mechanisches Modell MM1. In gleicher Weise ist das zweite Lösungsprinzip LP2 auf der Ebene der konkreten Ausgestaltung KA durch ein zweites Objekt realisiert, das ein Automatisierungsmodell AM2, ein elektrisches Modell EM2 und ein mechanisches Modell MM2 besitzt. Außerdem ist zwischen den beiden Objekten OB1 und OB2 eine Schnittstelle vorgesehen, die zum einen durch die Relation R13 "kommuniziert über Signale" und zum anderen mit der Relation R14 "übergibt Material" wie in der Ebene des Systemsentwurfs definiert ist. Neben diesen semantischen Relationen R13 und R14 kommt auch den Relationen R15, R16 und R17, die von der Ebene des Systementwurfs SE in die Ebene der konkreten Ausgestaltung KA weisen, eine konkrete Bedeutung zu. So ist beispielsweise die Relation R15 mit der Semantik versehen "wird steuerungstechnisch implementiert durch". Die Relation R16 hingegen besitzt die Semantik "wird elektrotechnisch implementiert durch" und die Relation R17 die Semantik "wird mechanisch implementiert durch". Mit diesen Relationen können darüber hinaus Vorgaben für konkrete Ausgestaltungen gemacht werden. Ein Beispiel dafür wären die Relationen R13 und R14. Diese beschreiben im Systementwurf SE eine Beziehung mit einer bestimmten Bedeutung. Diese Beziehung kann aufgrund der Kenntnis der Relationen R15 bis R17 als Vorgabe für die konkrete Ausgestaltung KA führen, was dort ebenfalls mit den Relationen R13 und R14 gekennzeichnet ist. Die Semantik dieser Relationen kann hier ebenfalls in der bereits erwähnten mechatronischen Integrationsapplikation erstellt und gemanagt werden.

Relationen mit einer definierten Semantik zu einem Modell des Systementwurfs bieten die Möglichkeit, einerseits vom Systementwurf in die verschiedenen disziplinspezifischen Detaillierungsmodelle zu navigieren. Gleichzeitig ist es möglich, bereits auf Systementwurfsebene definierte Abhängigkeiten in die konkrete Ausdetaillierungsphase zu übernehmen. Dadurch verringert sich der manuelle Kommunikations- und Änderungsaufwand zwischen den Entwicklern eines mechatronischen Systems, da dies systemunterstützt geschehen kann.

## Patentansprüche

1. Verfahren zum Herstellen einer Maschine durch
- Entwerfen eines ersten und eines zweiten Modells (MM, EM) jeweils vom mechanischen Typ, elektrischen Typ oder Automationstyp, wobei
- sich der Typ des ersten Modells (MM) von dem Typ des zweiten Modells (EM) unterscheidet, und wobei
- das erste Modell (MM) eine erste Komponente (A1M, A2M) aufweist und das zweite Modell (EM) eine zweite Komponente (A1E, A2E), sowie
- Fertigen der Maschine entsprechend dem ersten und zweiten Modell (MM, EM),
**gekennzeichnet durch**
- Festlegen einer Relation (R1, R2) zwischen der ersten Komponente (A1M, A2M) und der zweiten Komponente (A1E, A2E) und
- Berücksichtigen der Relation (R1, R2) bei dem Entwerfen mindestens eines der Modelle und/oder bei dem Fertigen der Maschine.

2. Verfahren nach Anspruch 1, wobei der Relation (R1, R2) eine Information betreffend den Typ der ersten und/oder zweiten Komponente oder die Art der Verbindung beider Komponenten zugeordnet wird.

3. Verfahren nach Anspruch 1 oder 2, wobei die erste oder zweite Komponente vom Typ Baugruppe, Bauelement oder Bauelementeteil ist.

4. Verfahren nach einem der vorhergehenden Ansprüche, wobei die beiden Modelle (MM, EM) gleichzeitig grafisch dargestellt werden und die Relation (R1, R2) zwischen den beiden Komponenten (A1M, A2M, A1E, A2E) grafisch unterstützt gesetzt wird.

5. Verfahren nach Anspruch 4, wobei die Relation (R1, R2) durch Ziehen und Ablegen in einem Grafiktool gesetzt wird.

6. Verfahren nach einem der vorhergehenden Ansprüche, wobei die beiden Komponenten (A1M, A2M, A1E, A2E) einschließlich der Relation (R1, R2) zwischen ihnen in eine Bibliothek (BIB) oder ein semantisches Netz (SM) übernommen werden.

7. Verfahren nach einem der Ansprüche 1 bis 5, wobei die Relation (R1, R2) in einer Bibliothek (BIB) oder einem semantischen Netz (SM) festgelegt wird.

8. Verfahren nach Anspruch 6 oder 7, wobei bei einem Erzeugen einer dritten Komponente, die gleich der ersten Komponente (A1M, A2M) ist, in dem ersten Modell (MM) automatisch eine der zweiten Komponente (A1E, A2E) entsprechende vierte Komponente in dem zweiten Modell (EM) generiert und zusätzlich auch eine der Relation entsprechende weitere Relation (R1, R2) zwischen der dritten und vierten Komponente durch Rückgriff auf die Bibliothek (BIB) oder das semantische Netz (SM) gebildet wird.

9. Verfahren nach Anspruch 8, wobei das Generieren der vierten Komponente ein Kopieren aus der Bibliothek (BIB) oder dem semantischen Netz (SM) umfasst.

10. Verfahren nach einem der Ansprüche 6 bis 9, wobei in der Bibliothek (BIB) oder dem semantischen Netz (SM) zu einer der Komponente mehrere Relationen gespeichert werden.

11. Verfahren nach einem der vorhergehenden Ansprüche, wobei bei Änderung der ersten Komponente (A1M, A2M) in dem ersten Modell (MM) automatisch auch die zweite Komponente (A1E, A2E) in dem zweiten Modell (EM) sowie gegebenenfalls deren Relation (R1, R2) geändert wird.

12. Verfahren nach einem der Ansprüche 9 bis 11, wobei bei dem Kopieren eine Verbindung zwischen der Komponente in der Bibliothek (BIB) oder dem semantischen Netz (SM) und der kopierten Komponente in dem jeweiligen Modell gespeichert wird.

13. Verfahren nach Anspruch 12, wobei bei einer Veränderung einer der Komponenten in der Bibliothek (BIB) die ursprüngliche Komponente zu der die Verbindung besteht in der Bibliothek gespeichert bleibt.

14. Verfahren nach einem der vorhergehenden Ansprüche, wobei durch die Relation (R1, R2) eine Äquivalenz zwischen beiden Komponenten hergestellt wird.

15. Verfahren nach einem der vorhergehenden Ansprüche, wobei das Festlegen der Relation (R1, R2) automatisch durch Analyse der Modelle erfolgt.

16. Vorrichtung zum Herstellen einer Maschine mit
- einer Entwurfseinrichtung zum Entwerfen eines ersten und eines zweiten Modells (MM, EM) jeweils vom mechanischen Typ, elektrischen Typ oder Automationstyp, wobei
- sich der Typ des ersten Modells von dem Typ des zweiten Modells unterscheidet, und wobei
- das erste Modell (MM) eine erste Komponente (A1M, A2M) aufweist und das zweite Modell (EM) eine zweite Komponente (A1E, A2E), sowie
- eine Fertigungseinrichtung zum Fertigen der Maschine entsprechend dem ersten und zweiten Modell (MM, EM),
**dadurch gekennzeichnet, dass**
- die Entwurfseinrichtung dazu ausgebildet ist, dass eine Relation (R1, R2) zwischen der ersten Komponente (A1M, A2M) und der zweiten Komponente (A1E, A2E) festlegbar und
- die Entwurfseinrichtung dazu ausgelegt ist, die Relation bei dem Entwerfen mindestens eines der Modelle (MM, EM) zu berücksichtigen, und/oder die Fertigungseinrichtung dazu ausgelegt ist, die Relation (R1, R2) bei dem Fertigen der Maschine automatisch zu berücksichtigen.
